# EUROPEAN PATENT APPLICATION

(11) **EP 4 571 073 A2**
(43) Date of publication of application: **18.06.2025**
(21) Application number: 24219994.1
(22) Date of filing: 13.12.2024
(51) Int. Cl.: F02C 6/08, F02C 7/14, F02C 7/18, F02C 9/18

(54) **VENTILATION SYSTEM FOR AIRCRAFT PROPULSION SYSTEM**

(30) Priority: 15.12.2023 US 202318542071
(71) Applicant: RTX Corporation, Farmington, CT 06032 (US)
(72) Inventor: PAPA, Federico, Port Saint Lucie, 34983 (US); ACKERMANN, William K., East Hartford, 06118 (US); REZVANI, Reza, Bolton, 06043 (US)
(74) Representative: Dehns

(57) **Abstract**

An assembly is provided for an aircraft propulsion system (10). This assembly includes a compressor section (29), a combustor section (30), a turbine section (31), a flowpath (56), a tail cone structure (54) and a ventilation system (26). The flowpath (56) extends through the compressor section (29), the combustor section (30) and the turbine section (31) from an inlet (58) into the flowpath (56) to an exhaust (60) from the flowpath (56). The tail cone structure (54) is arranged at the exhaust (60) from the flowpath (56). The ventilation system (26) is configured to bleed compressed air from the flowpath (56) along the compressor section (29) to provide ventilation air. The ventilation system (26) is configured to direct the ventilation air into an internal volume (86) in the tail cone structure (54).

## Description

### TECHNICAL FIELD

This disclosure relates generally to an aircraft propulsion system and, more particularly, to a ventilation system.

### BACKGROUND

Various types and configurations of ventilation systems are known in the art for an aircraft propulsion system. While these known ventilation systems have various benefits, there is still room in the art for improvement.

### SUMMARY

According to an aspect of the present disclosure, an assembly is provided for an aircraft propulsion system. This assembly includes a compressor section, a combustor section, a turbine section, a flowpath, a tail cone structure and a ventilation system. The flowpath extends through the compressor section, the combustor section and the turbine section from an inlet into the flowpath to an exhaust from the flowpath. The tail cone structure is arranged at the exhaust from the flowpath. The ventilation system is configured to bleed compressed air from the flowpath along the compressor section to provide ventilation air. The ventilation system is configured to direct the ventilation air into an internal volume in the tail cone structure.

According to another aspect of the present disclosure, another assembly is provided for an aircraft propulsion system. This assembly includes a compressor section, a combustor section, a turbine section, a flowpath, an electronic device and a ventilation system. The flowpath extends through the compressor section, the combustor section and the turbine section from an inlet into the flowpath to an exhaust from the flowpath. The electronic device is located in an internal volume of the aircraft propulsion system. The ventilation system is configured to bleed compressed air from the flowpath along the compressor section to provide ventilation air. The ventilation system is configured to direct the ventilation air into the internal volume to ventilate the electronic device. The ventilation system includes a ventilation air circuit, a cooling air circuit and an air-to-air heat exchanger. The ventilation air circuit extends through the air-to-air heat exchanger and is fluidly coupled between a ventilation circuit bleed port and the internal volume. The ventilation circuit bleed port is configured to bleed the compressed air from the flowpath along the compressor section to provide the ventilation air within the ventilation air circuit. The cooling air circuit extends through the air-to-air heat exchanger and is fluidly coupled to a cooling circuit bleed port. The cooling circuit bleed port is configured to bleed additional compressed air from the flowpath along the compressor section to provide cooling air within the cooling air circuit. The cooling circuit bleed port is disposed upstream of the ventilation circuit bleed port along the flowpath. The air-to-air heat exchanger is configured to transfer heat energy from the ventilation air into the cooling air to cool the ventilation air.

According to still another aspect of the present disclosure, another assembly is provided for an aircraft propulsion system. This assembly includes a compressor section, a combustor section, a turbine section, a flowpath, an electronic device and a ventilation system. The flowpath extends through the compressor section, the combustor section and the turbine section from an inlet into the flowpath to an exhaust from the flowpath. The electronic device is located in an internal volume of the aircraft propulsion system. The ventilation system is configured to bleed compressed air from the flowpath along the compressor section to provide ventilation air. The ventilation system is configured to direct the ventilation air into the internal volume to ventilate the electronic device. The ventilation system includes a ventilation air circuit, a working fluid circuit and a heat exchanger. The ventilation air circuit extends through the heat exchanger and is fluidly coupled between a ventilation circuit bleed port and the internal volume. The ventilation circuit bleed port is configured to bleed the compressed air from the flowpath along the compressor section to provide the ventilation air within the ventilation air circuit. The working fluid circuit extends through the heat exchanger. The heat exchanger is configured to transfer heat energy from the ventilation air into a liquid working fluid flowing within the working fluid circuit to cool the ventilation air.

The assembly may also include a tail cone structure. The electronic device may be located within the tail cone structure.

The internal volume may be disposed radially inboard of the flowpath.

The assembly may also include a tail cone structure. The internal volume may be at least partially formed by the tail cone structure.

The compressor section may include a low pressure compressor section and a high pressure compressor section. The ventilation system may be configured to bleed the compressed air from the flowpath along the high pressure compressor section to provide the ventilation air.

The ventilation system may include an air-to-air heat exchanger, a ventilation air circuit and a cooling air circuit. The air-to-air heat exchanger may be configured to transfer heat energy from the ventilation air into cooling air. The ventilation air circuit may extend through the air-to-air heat exchanger and may be fluidly coupled between a ventilation circuit bleed port and the internal volume. The ventilation circuit bleed port may be configured to bleed the compressed air from the flowpath along the compressor section to provide the ventilation air within the ventilation air circuit. The cooling air circuit may extend through the air-to-air heat exchanger and may be fluidly coupled to a cooling circuit bleed port. The cooling circuit bleed port may be configured to bleed additional compressed air from the flowpath along the compressor section to provide the cooling air within the cooling air circuit. The cooling circuit bleed port may be disposed upstream of the ventilation circuit bleed port along the flowpath.

The cooling circuit bleed port may be separated from the ventilation circuit bleed port along the flowpath by between two stages and four stages of the compressor section.

The cooling circuit bleed port may be separated from the ventilation circuit bleed port along the flowpath by five or more stages of the compressor section.

The ventilation system may also include an air-to-fuel heat exchanger and a fuel circuit. The fuel circuit may extend through the air-to-fuel heat exchanger. The ventilation air circuit may also extend through the air-to-fuel heat exchanger downstream of the air-to-air heat exchanger. The air-to-fuel heat exchanger may be configured to transfer additional heat energy from the ventilation air into fuel flowing within the fuel circuit.

The ventilation system may also include an air-to-oil heat exchanger and an oil circuit. The oil circuit may extend through the air-to-oil heat exchanger. The ventilation air circuit may also extend through the air-to-oil heat exchanger downstream of the air-to-air heat exchanger. The air-to-oil heat exchanger may be configured to transfer additional heat energy from the ventilation air into oil flowing within the oil circuit.

The ventilation system may include a heat exchanger, a ventilation air circuit and a working fluid circuit. The ventilation air circuit may extend through the heat exchanger and may be fluidly coupled between a ventilation circuit bleed port and the internal volume. The ventilation circuit bleed port may be configured to bleed the compressed air from the flowpath along the compressor section to provide the ventilation air within the ventilation air circuit. The working fluid circuit may extend through the heat exchanger. The heat exchanger may be configured to transfer heat energy from the ventilation air into a working fluid flowing within the working fluid circuit.

The assembly may also include a fuel source configured to direct fuel into the working fluid circuit. The working fluid may be or otherwise include the fuel.

The assembly may also include an oil source configured to direct oil into the working fluid circuit. The working fluid may be or otherwise include the oil.

The assembly may also include an electronic device located within the internal volume. The ventilation system may be configured to cool the electronic device with the ventilation air.

The electric device may be configurable as an electric motor.

The electric device may be configurable as an electric generator.

The tail cone structure may form an inner peripheral boundary of the exhaust from the flowpath.

The assembly may also include a propulsor rotor and an engine core configured to drive rotation of the propulsor rotor. The engine core may include the compressor section, the combustor section and the turbine section.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic cutaway illustration of an aircraft propulsion system.
FIG. 2 is a schematic illustration of a ventilation system servicing an electronic device within an internal volume of the aircraft propulsion system.
FIG. 3 is a schematic illustration of another ventilation system servicing the electronic device within the internal volume of the aircraft propulsion system.

### DETAILED DESCRIPTION

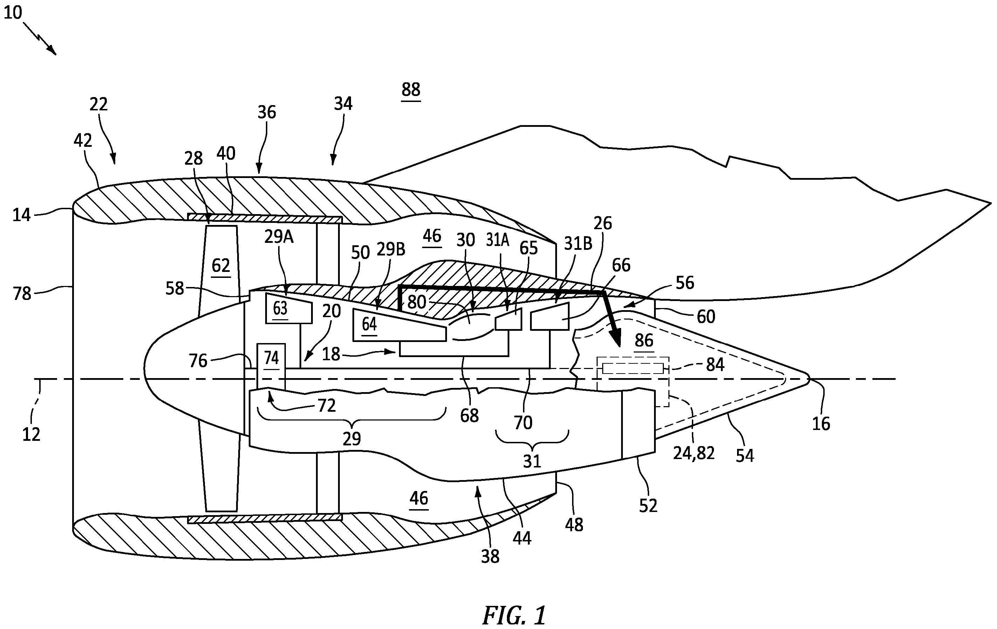

FIG. 1 illustrates a propulsion system 10 for an aircraft. The aircraft may be an airplane, a drone (e.g., an unmanned aerial vehicle (UAV)) or any other manned or unmanned aerial vehicle or system. The aircraft propulsion system 10 extends axially along an axis 12 between a forward, upstream end 14 of the aircraft propulsion system 10 and an aft, downstream end 16 of the aircraft propulsion system 10. This axis 12 may be an axial centerline of the aircraft propulsion system 10 and/or one or more components of the aircraft propulsion system 10; e.g., engine rotating assemblies 18 and 20. The axis 12 may also or alternatively be a rotational axis of one or more components of the aircraft propulsion system 10; e.g., the engine rotating assemblies 18 and 20. The aircraft propulsion system 10 of FIG. 1 includes a turbine engine 22, an electronic device 24 and a ventilation system 26 for servicing the electronic device 24.

The turbine engine 22 may be configured as a turbofan engine. The turbine engine 22 of FIG. 1, for example, includes a fan section 28, a compressor section 29, a combustor section 30 and a turbine section 31. The compressor section 29 of FIG. 1 includes a low pressure compressor (LPC) section 29A and a high pressure compressor (HPC) section 29B. The turbine section 31 of FIG. 1 includes a high pressure turbine (HPT) section 31A and a low pressure turbine (LPT) section 31B.

The engine sections 28-31B of FIG. 1 are arranged sequentially along the axis 12 within an aircraft propulsion system housing 34. This housing 34 includes an outer housing structure 36 and an inner housing structure 38.

The outer housing structure 36 includes an outer case 40 (e.g., a fan case, a containment case, etc.) and an outer structure of a nacelle - an outer nacelle structure 42. The outer case 40 houses at least the fan section 28. The outer nacelle structure 42 houses and provides an aerodynamic cover for the outer case 40. The outer nacelle structure 42 also covers a portion of an inner structure of the nacelle - an inner nacelle structure 44, which may also be referred to as an inner fixed structure. More particularly, the outer nacelle structure 42 axially overlaps and extends circumferentially about (e.g., completely around) the inner nacelle structure 44. The outer nacelle structure 42 and the inner nacelle structure 44 thereby at least partially or completely form a (e.g., annular) bypass flowpath 46 in the aircraft propulsion system 10. This bypass flowpath 46 extends axially along the axis 12 within the aircraft propulsion system 10 to a bypass exhaust 48, where the bypass flowpath 46 is radially between the outer nacelle structure 42 and the inner nacelle structure 44.

The inner housing structure 38 includes an inner case 50 (e.g., a core case) and the inner nacelle structure 44. The inner case 50 houses one or more of the engine sections 29A-31B, where at least (or only) the engine sections 29A-31B may collectively form a core of the turbine engine 22. The inner nacelle structure 44 houses and provides an aerodynamic cover for the inner case 50. A downstream / aft portion of the inner housing structure 38 such as, for example, a (e.g., tubular) core exhaust nozzle 52 of the inner nacelle structure 44 also covers at least a portion of a tail cone structure 54; e.g., an (e.g., conical) exhaust center body. More particularly, the inner nacelle structure 44 and its exhaust nozzle 52 axially overlap and extend circumferentially about (e.g., completely around) the tail cone structure 54. The exhaust nozzle 52 and the tail cone structure 54 may thereby collectively form a downstream / aft portion of a (e.g., annular) core flowpath 56. This core flowpath 56 of FIG. 1 extends longitudinally within the engine core from an airflow inlet 58 into the core flowpath 56 to a combustion products exhaust 60 from the core flowpath 56. Within the engine core, the core flowpath 56 extends sequentially through the LPC section 29A, the HPC section 29B, the combustor section 30, the HPT section 31A and the LPT section 31B between the core inlet 58 and the core exhaust 60. With this arrangement, the exhaust nozzle 52 and the tail cone structure 54 may be arranged at (e.g., on, adjacent or proximate) the core exhaust 60. The exhaust nozzle 52 of FIG. 1, for example, forms a radial outer peripheral boundary of the core exhaust 60. The tail cone structure 54 of FIG. 1 forms a radial inner peripheral boundary of the core exhaust 60.

Each of the engine sections 28, 29A, 29B, 31A and 31B includes a respective bladed rotor 62-66. Each of these engine rotors 62-66 includes a plurality of rotor blades arranged circumferentially around and connected to one or more respective rotor bases; e.g., disks and/or hubs. The rotor blades, for example, may be formed integral with or mechanically fastened, welded, brazed and/or otherwise attached to the respective rotor base(s).

The HPC rotor 64 is coupled to and rotatable with the HPT rotor 65. The HPC rotor 64 of FIG. 1, for example, is connected to the HPT rotor 65 through a high speed shaft 68. At least (or only) the HPC rotor 64, the HPT rotor 65 and the high speed shaft 68 may collectively form the high speed rotating assembly 18; e.g., a high speed spool of the engine core. The LPC rotor 63 is coupled to and rotatable with the LPT rotor 66. The LPC rotor 63 of FIG. 1, for example, is connected to the LPT rotor 66 through a low speed shaft 70. At least (or only) the LPC rotor 63, the LPT rotor 66 and the low speed shaft 70 may collectively form the low speed rotating assembly 20; e.g., a low speed spool of the engine core. This low speed rotating assembly 20 is also coupled to the fan rotor 62 through a drivetrain 72. The drivetrain 72 may be configured as a geared drivetrain, where a geartrain 74 (e.g., a transmission, a speed change device, an epicyclic geartrain, etc.) is disposed between and operatively couples the fan rotor 62 (e.g., through a fan shaft 76) to the low speed rotating assembly 20 (e.g., through the low speed shaft 70). With this arrangement, the fan rotor 62 may rotate at a different (e.g., slower) rotational velocity that the low speed rotating assembly 20 and its LPT rotor 66. However, the drivetrain 72 may alternatively be configured as a direct drive drivetrain, where the geartrain 74 is omitted. With this arrangement, the fan rotor 62 and the LPT rotor 66 may rotate at a common (the same) rotational velocity. Referring again to FIG. 1, each engine rotor 62-66 may be rotatable about the axis 12.

During operation, ambient air enters the turbine engine 22 through an airflow inlet 78 into the aircraft propulsion system 10. This air is directed through the fan section 28 and into the core flowpath 56 and the bypass flowpath 46. The air within the core flowpath 56 may be referred to as "core air". The air within the bypass flowpath 46 may be referred to as "bypass air".

The core air is compressed by the LPC rotor 63 and the HPC rotor 64 and directed into a combustion chamber 80 (e.g., an annular combustion chamber) of a combustor (e.g., an annular combustor) in the combustor section 30. Fuel is injected into the combustion chamber 80 and mixed with the compressed core air to provide a fuel-air mixture. This fuel-air mixture is ignited and combustion products thereof flow through and sequentially drive rotation of the HPT rotor 65 and the LPT rotor 66. The rotation of the HPT rotor 65 and the LPT rotor 66 respectively drive rotation of the HPC rotor 64 and the LPC rotor 63 and, thus, compression of the air received from the core inlet 58. The rotation of the LPT rotor 66 also drives rotation of the fan rotor 62 through the drivetrain 72; e.g., the geartrain 74. The rotation of the fan rotor 62 propels the bypass air through and out of the bypass flowpath 46. The propulsion of the bypass air may account for a majority of forward thrust generated by the aircraft propulsion system 10, e.g., more than seventy-five percent (75%) of forward thrust. The aircraft propulsion system 10 of the present disclosure, however, is not limited to the foregoing exemplary thrust ratio.

The electronic device 24 may be configured as or otherwise include an electric machine 82. A rotor 84 of this electric machine 82 may be operatively coupled to and rotatable with a rotating assembly of the turbine engine 22; e.g., the low speed rotating assembly 20. The machine rotor 84 may thereby drive rotation of the respective engine rotating assembly and/or the respective engine rotating assembly may drive rotation of the machine rotor 84. Examples of the electric machine 82 include a motor-generator, a dedicated electric motor (e.g., a starter motor, a supplemental power motor, etc.) and a dedicated electric generator. When configured as the motor-generator, the electric machine 82 may operate as an electric motor during a motor mode of operation, and the electric machine 82 may operate as an electric generator during a generator mode of operation. The present disclosure, however, is not limited to such exemplary electronic devices. The electronic device 24, for example, may alternatively be configured as or otherwise include a sensor or a sensor system or any other electronic device used to facilitate operation of the aircraft propulsion system 10 and, for example, its turbine engine 22.

The electronic device 24 is arranged within the aircraft propulsion system 10. More particularly, the electronic device 24 is arranged in an internal volume 86 (e.g., a cavity, a plenum, a chamber, etc.) of the aircraft propulsion system 10. This internal volume 86 of FIG. 1 is located within (or may project axially into) the tail cone structure 54. The internal volume 86 may also be formed by the tail cone structure 54. With this arrangement, the electronic device 24 of FIG. 1 is housed within (or may project axially into) the tail cone structure 54.

During operation, the tail cone structure 54 is surrounded by relatively hot combustion products flowing within the core flowpath 56 and/or exhausted from the core exhaust 60 into an environment 88 external to the aircraft propulsion system 10. These relatively hot combustion products may heat up the tail cone structure 54 and, thus, an internal environment within the internal volume 86. Operation of the electronic device 24 may also heat up the internal environment within the internal volume 86.

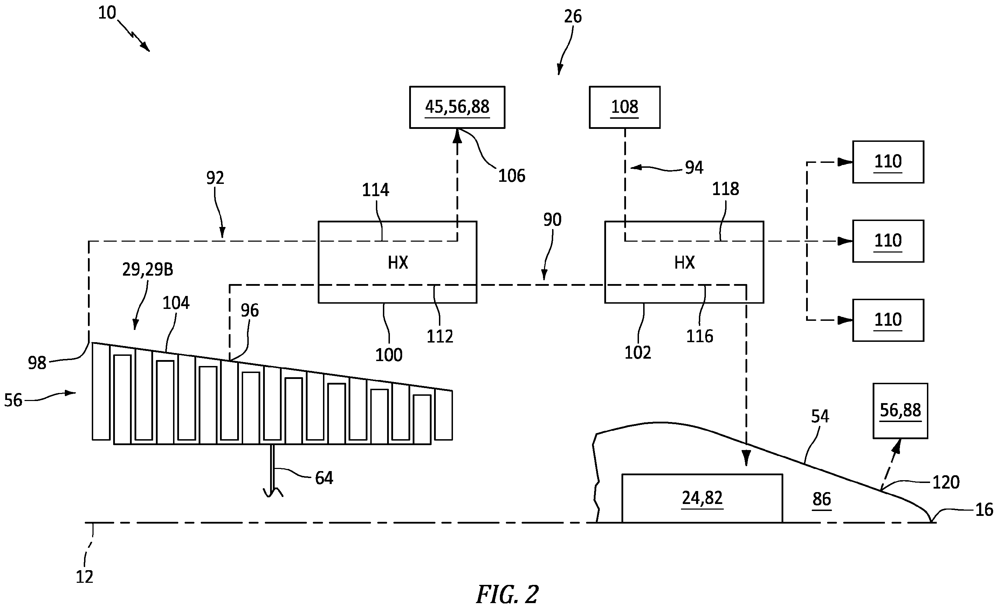

Referring to FIG. 2, the ventilation system 26 is provided to condition and/or ventilate the internal volume 86. The ventilation system 26 of FIG. 2, for example, directs pressurized ventilation air into the internal volume 86. This ventilation air may cool the electronic device 24 and/or the tail cone structure 54. The ventilation system 26 of FIG. 2 includes a ventilation air circuit 90, one or more cooling circuit 92 and 94, one or more bleed ports 96 and 98, and one or more heat exchangers 100 and 102.

The ventilation air circuit 90 is configured as or otherwise includes a passage (or multiple passages) that fluidly couples the ventilation circuit bleed port 96 to the internal volume 86. The ventilation air circuit 90 of FIG. 2, for example, extends from the ventilation circuit bleed port 96 to an inlet into the internal volume 86. Between the ventilation circuit bleed port 96 and the internal volume 86, the ventilation air circuit 90 also extends through the air-to-air heat exchanger 100 and the air-to-working fluid heat exchanger 102. The air-to-working fluid heat exchanger 102 of FIG. 2 is arranged downstream of the air-to-air heat exchanger 100 along the ventilation air circuit 90.

The ventilation circuit bleed port 96 is configured to bleed a first portion of the compressed core air from the core flowpath 56 along the compressor section 29 and, more particularly, along the HPC section 29B. The ventilation circuit bleed port 96 of FIG. 2, for example, may be configured as or otherwise include an opening (or multiple openings) in an outer wall 104 of the HPC section 29B, which outer wall 104 may be formed by one or more shrouds (e.g., blade outer air seals (BOAS)), outer platforms and/or outer liners which may collectively form a radial outer peripheral boundary of the core flowpath 56 in the HPC section 29B. Alternatively, the ventilation circuit bleed port 96 may be configured as or otherwise include a scoop arranged with the outer wall 104 of the HPC section 29B.

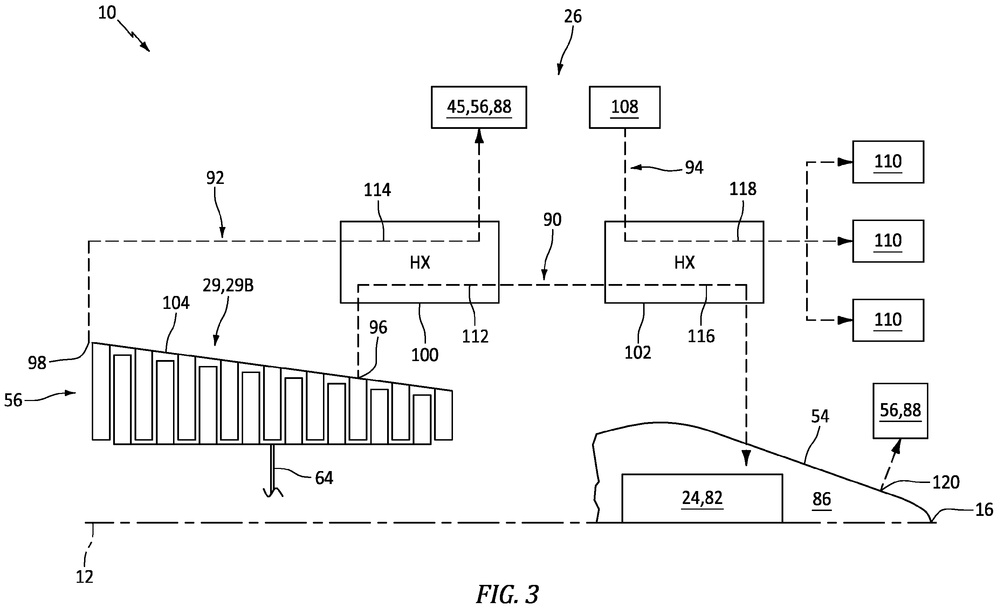

The ventilation circuit bleed port 96 may be disposed at an intermediate location along the HPC section 29B. The ventilation circuit bleed port 96 of FIG. 2, for example, is disposed at an axial third stage of the HPC section 29B. Alternatively, referring to FIG. 3, the ventilation circuit bleed port 96 may be disposed at an axial sixth stage of the HPC section 29B. The present disclosure, however, is not limited to such exemplary ventilation circuit bleed port locations nor to the specific number of HPC stages shown in FIGS. 2 and 3. For example, in other embodiments, the ventilation circuit bleed port 96 may be disposed upstream of the third stage of the HPC section 29B, at a stage between the third and the sixth stages of the HPC section 29B, or downstream of the sixth stage of the HPC section 29B. Moreover, while the HPC section 29B of FIGS. 2 and 3 are shown with eight stages, the HPC section 29B may include less than or more than eight HPC stages. Here, each HPC stage includes a single circumferential array of the HPC rotor blades and, for example, a single circumferential array of the HPC stator vanes.

Referring to FIG. 2, the cooling air circuit 92 is configured as or otherwise includes a passage (or multiple passages) that fluidly couples the cooling circuit bleed port 98 to a cooling circuit outlet 106 (or multiple outlets). The cooling air circuit 92 of FIG. 2, for example, extends from the cooling circuit bleed port 98 to the cooling circuit outlet 106, which cooling circuit outlet 106 may be fluidly coupled to one of the flowpaths 46, 56 (see FIG. 1), another destination within the aircraft propulsion system 10, or the external environment 88. Between the cooling circuit bleed port 98 and the cooling circuit outlet 106, the cooling air circuit 92 also extends through the air-to-air heat exchanger 100. However, the cooling air circuit 92 is fluidly independent of (e.g., decoupled from) the ventilation air circuit 90 both inside and outside of the air-to-air heat exchanger 100.

The cooling circuit bleed port 98 is configured to bleed a second portion of the compressed core air from the core flowpath 56 along the compressor section 29 and, more particularly, along the HPC section 29B. The cooling circuit bleed port 98 of FIG. 2, for example, may be configured as or otherwise include an opening (or multiple openings) in the outer wall 104 of the HPC section 29B. Alternatively, the cooling circuit bleed port 98 may be configured as or otherwise include a scoop arranged with the outer wall 104 of the HPC section 29B.

The cooling circuit bleed port 98 is disposed at a location along the HPC section 29B upstream of the ventilation circuit bleed port 96. The cooling circuit bleed port 98 of FIG. 2, for example, is disposed at an upstream end of the HPC section 29B. With such an arrangement, the cooling circuit bleed port 98 may be separated from the ventilation circuit bleed port 96 along the core flowpath 56 by between two stages and four stages of the HPC section 29B; e.g., three stages of the HPC section 29B. Alternatively, referring to FIG. 3, the cooling circuit bleed port 98 may be separated from the ventilation circuit bleed port 96 along the core flowpath 56 by five or more stages of the HPC section 29B; e.g., six stages of the HPC section 29B. The present disclosure, however, is not limited to such an exemplary cooling circuit bleed port location nor to the exemplary spacing between the cooling circuit bleed port 98 and the ventilation circuit bleed port 96. Moreover, while the cooling circuit bleed port 98 is described as bleeding the compressed core air from the core flowpath 56, it is contemplated the cooling circuit bleed port 98 may alternatively bleed air from another flowpath within the aircraft propulsion system 10.

Referring to FIG. 2, the working fluid circuit 94 is configured as or otherwise includes a passage (or multiple passages) that fluidly couples a working fluid source 108 to one or more other components 110 of the aircraft propulsion system 10 and its turbine engine 22. The working fluid circuit 94 of FIG. 2, for example, extends from the working fluid source 108 to the engine components 110. Between the working fluid source 108 and the engine components 110, the working fluid circuit 94 also extends through the air-to-working fluid heat exchanger 102. However, the working fluid circuit 94 is fluidly independent of (e.g., decoupled from) the ventilation air circuit 90 both inside and outside of the air-to-working fluid heat exchanger 102.

The working fluid circuit 94 is configured to direct a (e.g., liquid) working fluid from the working fluid source 108 to the engine components 110. In some embodiments, the working fluid source 108 may be a fuel source (e.g., a fuel reservoir, a fuel pump, etc.), the engine components 110 may be fuel injectors in the combustor section 30 of the turbine engine 22 (see FIG. 1), and the working fluid may be fuel; e.g., jet fuel or otherwise. In other embodiments, however, the working fluid source 108 may be an oil source (e.g., an oil reservoir, an oil sump, an oil pump, etc.), the engine components 110 may be any components which utilizes oil for lubrication and/or cooling (e.g., bearings, the geartrain 74 of FIG. 1, etc.), and the working fluid may be oil. In still other embodiments, the working fluid source 108 may be a coolant source (e.g., a coolant reservoir, a coolant pump, etc.), the engine components 110 may be any components which utilize coolant for cooling, and the working fluid may be liquid coolant. The present disclosure, however, is not limited to such exemplary working fluid circuit arrangements, nor to such exemplary working fluids.

The air-to-air heat exchanger 100 includes an internal ventilation air passage 112 and an internal cooling air passage 114. The ventilation air passage 112 forms a portion of the ventilation air circuit 90 which extends longitudinally through the air-to-air heat exchanger 100. The cooling air passage 114 forms a portion of the cooling air circuit 92 which extends longitudinally through the air-to-air heat exchanger 100. This cooling air passage 114 is fluidly discrete from the ventilation air passage 112 within the air-to-air heat exchanger 100.

The air-to-air heat exchanger 100 of FIG. 2 is schematically shown as a single pass, parallel flow heat exchanger. The air-to-air heat exchanger 100, however, is not limited to such an exemplary arrangement. The air-to-air heat exchanger 100, for example, may alternatively be configured as a counterflow heat exchanger, a crossflow heat exchanger, or any other type of heat exchanger. Moreover, each heat exchanger passage 112, 114 may make any number of passes (e.g., a single pass or multiple passes) within the air-to-air heat exchanger 100.

The air-to-working fluid heat exchanger 102 includes an internal ventilation air passage 116 and an internal working fluid passage 118; e.g., fuel passage, oil passage, coolant passage, etc. The ventilation air passage 116 forms a portion of the ventilation air circuit 90 which extends longitudinally through the air-to-working fluid heat exchanger 102. The working fluid passage 118 forms a portion of the working fluid circuit 94 which extends longitudinally through the air-to-working fluid heat exchanger 102. This working fluid passage 118 is fluidly discrete from the ventilation air passage 116 within the air-to-working fluid heat exchanger 102.

The air-to-working fluid heat exchanger 102 of FIG. 2 is schematically shown as a single pass, parallel flow heat exchanger. The air-to-working fluid heat exchanger 102, however, is not limited to such an exemplary arrangement. The air-to-working fluid heat exchanger 102, for example, may alternatively be configured as a counterflow heat exchanger, a crossflow heat exchanger, or any other type of heat exchanger. Moreover, each heat exchanger passage 116, 118 may make any number of passes (e.g., a single pass or multiple passes) within the air-to-working fluid heat exchanger 102.

During operation of the ventilation system 26 of FIG. 2, the ventilation circuit bleed port 96 bleeds a portion of the compressed core air from the core flowpath 56 along the HPC section 29B. This bled core air is directed into the ventilation air circuit 90 as ventilation air at a first temperature and a first pressure. Concurrently, the cooling circuit bleed port 98 bleeds a portion of the compressed core air from the core flowpath 56 along the HPC section 29B. This bled core air is directed into the cooling air circuit 92 as cooling air at a second temperature and a second pressure. Since the cooling circuit bleed port 98 is upstream of the ventilation circuit bleed port 96 along the core flowpath 56 / in the compressor section 29 and its HPC section 29B, the second temperature is lower than the first temperature and the second pressure is lower than the first pressure.

The ventilation air circuit 90 directs its relatively warm and high pressure ventilation air into the ventilation air passage 112 of the air-to-air heat exchanger 100. Concurrently, the cooling air circuit 92 directs its relatively cool and low pressure cooling air into the cooling air passage 114 of the air-to-air heat exchanger 100. The air-to-air heat exchanger 100 transfers heat energy from the ventilation air flowing in the ventilation air passage 112 to the cooling air flowing in the cooling air passage 114. The air-to-air heat exchanger 100 thereby cools the ventilation air using the cooling air.

The ventilation air circuit 90 directs the now partially cooled and still high pressure ventilation air into the ventilation air passage 116 of the air-to-working fluid heat exchanger 102. Concurrently, the working fluid circuit 94 directs its relatively cool working fluid into the working fluid passage 118 of the air-to-working fluid heat exchanger 102. The air-to-working fluid heat exchanger 102 transfers additional heat energy from the ventilation air flowing in the ventilation air passage 116 to the working fluid flowing in the working fluid passage 118. The air-to-working fluid heat exchanger 102 thereby further cools the ventilation air using the working fluid.

The ventilation air circuit 90 directs the now further cooled (e.g., fully cooled) and still high pressure ventilation air into the internal volume 86. The ventilation air may contact and flow around and/or through the electronic device 24; e.g., the electric machine 82. The ventilation air may thereby cool the electronic device 24. The ventilation air may also flush air out of the internal volume 86 through an outlet 120. This volume outlet 120 may direct the flushed air into the external environment 88. Alternatively, the volume outlet 120 may be fluidly coupled with a passage that directs the flushed air into another volume within the aircraft propulsion system 10; e.g., the bypass flowpath 46 or otherwise.

By precooling the ventilation air with the air-to-air heat exchanger 100, the ventilation air entering the air-to-working fluid heat exchanger 102 may be lowered to a temperature below an ignition temperature of the working fluid; e.g., fuel, oil, etc. Utilizing the air-to-air heat exchanger 100 may thereby facilitate use of higher pressure and, thus, warmer bleed air than would otherwise be feasible if, for example, the ventilation air was not pre-cooled prior to entering the air-to-working fluid heat exchanger 102. The ventilation air is then further cooled using the working fluid as described above, which in turn heats the working fluid. This heating of the working fluid may facilitate an improvement in turbine engine performance, particularly where the working fluid is fuel or oil.

The ventilation system 26 of the present disclosure may be utilized with various turbine engines other than the one described above. The turbine engine, for example, may be a geared turbine engine or a direct drive turbine engine. The turbine engine may be configured with a single spool, with two spools (e.g., see FIG. 1), or with more than two spools. The turbine engine may be configured as a turbofan engine, a turbojet engine, a turboprop engine, a turboshaft engine, a propfan engine, a pusher fan engine or any other type of turbine engine. The turbine engine may alternatively be configured as an auxiliary power unit (APU). The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system (10), comprising:
a compressor section (29);
a combustor section (30);
a turbine section (31);
a flowpath (56) extending through the compressor section (29), the combustor section (30) and the turbine section (31) from an inlet (58) into the flowpath (56) to an exhaust (60) from the flowpath (56);
a tail cone structure (54) arranged at the exhaust (60) from the flowpath (56); and
a ventilation system (26) configured to bleed compressed air from the flowpath (56) along the compressor section (29) to provide ventilation air, and the ventilation system (26) configured to direct the ventilation air into an internal volume (86) in the tail cone structure (54).

2. The assembly of claim 1, wherein:
the compressor section (29) comprises a low pressure compressor section (29A) and a high pressure compressor section (29B); and
the ventilation system (26) is configured to bleed the compressed air from the flowpath (56) along the high pressure compressor section (29B) to provide the ventilation air.

3. The assembly of claim 1 or 2, wherein the ventilation system (26) includes:
an air-to-air heat exchanger (100) configured to transfer heat energy from the ventilation air into cooling air;
a ventilation air circuit (90) extending through the air-to-air heat exchanger (100) and fluidly coupled between a ventilation circuit bleed port (96) and the internal volume (86), the ventilation circuit bleed port (96) configured to bleed the compressed air from the flowpath (56) along the compressor section (29) to provide the ventilation air within the ventilation air circuit (90); and
a cooling air circuit (92) extending through the air-to-air heat exchanger (100) and fluidly coupled to a cooling circuit bleed port (98), the cooling circuit bleed port (98) configured to bleed additional compressed air from the flowpath (56) along the compressor section (29) to provide the cooling air within the cooling air circuit (92), and the cooling circuit bleed port (98) disposed upstream of the ventilation circuit bleed port (96) along the flowpath (56).

4. The assembly of claim 3, wherein:
the cooling circuit bleed port (98) is separated from the ventilation circuit bleed port (96) along the flowpath (56) by between two stages and four stages of the compressor section (29); or
the cooling circuit bleed port (98) is separated from the ventilation circuit bleed port (96) along the flowpath (56) by five or more stages of the compressor section (29).

5. The assembly of claim 3 or 4, wherein the ventilation system (26) further includes:
an air-to-fuel heat exchanger (102); and
a fuel circuit (94) extending through the air-to-fuel heat exchanger (102);
the ventilation air circuit (90) further extending through the air-to-fuel heat exchanger (102) downstream of the air-to-air heat exchanger (100); and
the air-to-fuel heat exchanger (102) configured to transfer additional heat energy from the ventilation air into fuel flowing within the fuel circuit (94).

6. The assembly of claim 3 or 4, wherein the ventilation system (26) further includes:
an air-to-oil heat exchanger (102); and
an oil circuit (94) extending through the air-to-oil heat exchanger (102);
the ventilation air circuit (90) further extending through the air-to-oil heat exchanger (102) downstream of the air-to-air heat exchanger (100); and
the air-to-oil heat exchanger (102) configured to transfer additional heat energy from the ventilation air into oil flowing within the oil circuit (94).

7. The assembly of any of claims 1 to 4, wherein the ventilation system (26) includes
a heat exchanger (102);
a ventilation air circuit (90) extending through the heat exchanger (102) and fluidly coupled between a ventilation circuit bleed port (96) and the internal volume (86), the ventilation circuit bleed port (96) configured to bleed the compressed air from the flowpath (56) along the compressor section (29) to provide the ventilation air within the ventilation air circuit (90); and
a working fluid circuit (94) extending through the heat exchanger (102);
the heat exchanger (102) configured to transfer heat energy from the ventilation air into a working fluid flowing within the working fluid circuit (94), optionally further comprising:
a fuel source (108) configured to direct fuel into the working fluid circuit (94), wherein the working fluid comprises the fuel; or
an oil source (108) configured to direct oil into the working fluid circuit (94), wherein the working fluid comprises the oil.

8. The assembly of any preceding claim, further comprising:
an electronic device (24) located within the internal volume (86);
the ventilation system (26) configured to cool the electronic device (24) with the ventilation air.

9. The assembly of claim 8, wherein:
the electric device is configurable as an electric motor; and/or
the electric device is configurable as an electric generator.

10. The assembly of any preceding claim, wherein the tail cone structure (54) forms an inner peripheral boundary of the exhaust (60) from the flowpath (56).

11. The assembly of any preceding claim, further comprising:
a propulsor rotor (84); and
an engine core configured to drive rotation of the propulsor rotor (84), the engine core including the compressor section (29), the combustor section (30) and the turbine section (31).

12. An assembly for an aircraft propulsion system (10), comprising:
a compressor section (29);
a combustor section (30);
a turbine section (31);
a flowpath (56) extending through the compressor section (29), the combustor section (30) and the turbine section (31) from an inlet (58) into the flowpath (56) to an exhaust (60) from the flowpath (56);
an electronic device (24) located in an internal volume (86) of the aircraft propulsion system (10); and
a ventilation system (26) configured to bleed compressed air from the flowpath (56) along the compressor section (29) to provide ventilation air, the ventilation system (26) configured to direct the ventilation air into the internal volume (86) to ventilate the electronic device (24), and the ventilation system (26) including a ventilation air circuit (90), a cooling air circuit (92) and an air-to-air heat exchanger (100);
the ventilation air circuit (90) extending through the air-to-air heat exchanger (100) and fluidly coupled between a ventilation circuit bleed port (96) and the internal volume (86), the ventilation circuit bleed port (96) configured to bleed the compressed air from the flowpath (56) along the compressor section (29) to provide the ventilation air within the ventilation air circuit (90);
the cooling air circuit (92) extending through the air-to-air heat exchanger (100) and fluidly coupled to a cooling circuit bleed port (98), the cooling circuit bleed port (98) configured to bleed additional compressed air from the flowpath (56) along the compressor section (29) to provide cooling air within the cooling air circuit (92), and the cooling circuit bleed port (98) disposed upstream of the ventilation circuit bleed port (96) along the flowpath (56); and
the air-to-air heat exchanger (100) configured to transfer heat energy from the ventilation air into the cooling air to cool the ventilation air.

13. The assembly of claim 12, wherein:
the internal volume (86) is disposed radially inboard of the flowpath (56); and/or
the assembly further comprises a tail cone structure (54), the internal volume (86) at least partially formed by the tail cone structure (54).

14. An assembly for an aircraft propulsion system (10), comprising:
a compressor section (29);
a combustor section (30);
a turbine section (31);
a flowpath (56) extending through the compressor section (29), the combustor section (30) and the turbine section (31) from an inlet (58) into the flowpath (56) to an exhaust (60) from the flowpath (56);
an electronic device (24) located in an internal volume (86) of the aircraft propulsion system (10); and
a ventilation system (26) configured to bleed compressed air from the flowpath (56) along the compressor section (29) to provide ventilation air, the ventilation system (26) configured to direct the ventilation air into the internal volume (86) to ventilate the electronic device (24), and the ventilation system (26) including a ventilation air circuit (90), a working fluid circuit (94) and a heat exchanger (102);
the ventilation air circuit (90) extending through the heat exchanger (102) and fluidly coupled between a ventilation circuit bleed port (96) and the internal volume (86), the ventilation circuit bleed port (96) configured to bleed the compressed air from the flowpath (56) along the compressor section (29) to provide the ventilation air within the ventilation air circuit (90);
the working fluid circuit (94) extending through the heat exchanger (102); and
the heat exchanger (102) configured to transfer heat energy from the ventilation air into a liquid working fluid flowing within the working fluid circuit (94) to cool the ventilation air.

15. The assembly of claim 14, further comprising:
a tail cone structure (54);
the electronic device (24) located within the tail cone structure (54).
